# EUROPÄISCHE PATENTSCHRIFT

(11) **EP 2 737 003 B1**
(45) Veröffentlichungstag und Bekanntmachung des Hinweises auf die Patenterteilung: **18.01.2017**
(21) Anmeldenummer: 12735239.1
(22) Anmeldetag: 25.06.2012
(51) Int. Cl.: C09K 11/02, H01J 61/42, C09K 11/08, C09K 11/76, C09K 11/77, H01J 61/44

(54) **LEUCHTSTOFF MIT SCHUTZSCHICHT UND LEUCHTSTOFFLAMPE DENSELBEN ENTHALTEND**
ILLUMINANT AND ILLUMINANT LAMP COMPRISING SAID ILLUMINANT
LUMINOPHORE ET LAMPE À LUMINOPHORE CONTENANT CELUI-CI

(30) Priorität: 29.07.2011 DE 202011109804 U; 05.03.2012 DE 102012203419
(43) Veröffentlichungstag der Anmeldung: 04.06.2014
(73) Patentinhaber: OSRAM GmbH, 80807 München (DE)
(72) Erfinder: HIRRLE, Renate, 86163 Augsburg (DE); OTTO, Robert, 86391 Stadtbergen (DE); STRAUSS, Jörg, Danvers MA 01923 (US); KONRAD, Armin, 86845 Grossaitingen (DE)
(74) Vertreter: Nordmeyer, Philipp Werner
(86) Internationale Anmeldenummer: PCT/EP2012/062248
(87) Internationale Veröffentlichungsnummer: WO 2013/017340

(56) Entgegenhaltungen:
- EP-A1- 0 100 122
- EP-A1- 1 473 347
- EP-A1- 1 473 348
- EP-A2- 0 077 077
- EP-A2- 0 160 856
- EP-A2- 0 279 254
- WO-A1-2007/082663
- DE-A1-102007 033 026
- DE-A1-102009 012 698
- GB-A- 678 692
- JP-A- S5 751 782
- JP-A- 52 022 583
- JP-A- 52 022 584
- JP-A- S57 128 780
- JP-A- S57 128 782
- SU-A1- 392 573
- US-A- 4 121 132
- US-A- 4 393 330
- SUNG-IL OH ET AL: "Protective Metal Oxide Coatings on Zinc-sulfide-based Phosphors and their Cathodoluminescence Properties", BULLETIN OF THE KOREAN CHEMICAL SOCIETY, Bd. 31, Nr. 12, 20. Dezember 2010 (2010-12-20), Seiten 3723-3729, XP55039480, ISSN: 0253-2964, DOI: 10.5012/bkcs.2010.31.12.3723
- E.E. JAY ET AL: "Partitioning of dopant cations between [beta]-tricalcium phosphate and fluorapatite", JOURNAL OF NUCLEAR MATERIALS, Bd. 414, Nr. 3, 7. Mai 2011 (2011-05-07), Seiten 367-373, XP55039580, ISSN: 0022-3115, DOI: 10.1016/j.jnucmat.2011.05.003
- SANKAR ET AL: "Efficient blue luminescence in Ce<3+>-activated borates, A6MM'(BO3)6", SOLID STATE SCIENCES, ELSEVIER, PARIS, FR, Bd. 10, Nr. 12, 1. Dezember 2008 (2008-12-01), Seiten 1864-1874, XP025815713, ISSN: 1293-2558, DOI: 10.1016/J.SOLIDSTATESCIENCES.2008.03.029 [gefunden am 2008-04-18]
- KÖMPE K ET AL: "Mit einer Quantenausbeute von 70% grün lumineszierende CePO4:Tb-Nanopartikel mit einer Schale aus LaPO4", ANGEWANDTE CHEMIE. INTERNATIONAL EDITION, WILEY VCH VERLAG, WEINHEIM, Bd. 115, 1. Januar 2003 (2003-01-01), Seiten 5672-5675, XP002425779, ISSN: 1433-7851, DOI: 10.1002/ANGE.200351943

## Beschreibung

Die vorliegende Erfindung betrifft einen Leuchtstoff für eine Niederdruckentladungslampe gemäß dem Oberbegriff des Anspruchs 1, eine Leuchtstoffzusammensetzung gemäß dem Oberbegriff des Anspruchs 10 sowie eine Niederdruckentladungslampe gemäß dem Oberbegriff des Anspruchs 13.

Durch die Verordnung EG 245/2009 (geändert durch die Verordnung 347/2010) ist eine Reihe von Leuchtstofflampen mit seltenerdfreier Leuchtstoffbeschichtung verboten. Als Ersatzprodukt wurden Lampen mit gleicher Leistungsaufnahme aber deutlich höherer Lichtausbeute und höherem Lichtstrom verwendet, wobei eine Beschichtung aus Seltenerdleuchtstoffen verwendet wird. Nachteilig dabei ist der Anteil an Seltene Erden, da diese zunehmend verknappen und deren Preise auf dem Weltmarkt in den letzten Jahren stark gestiegen sind. Es besteht daher Bedarf an Leuchtstofflampen mit reduziertem Seltenerdanteil, die die gleiche Effizienz und die gleiche Lichtstromstabilität wie die zurzeit verwendeten Leuchtstofflampen besitzen, um so die Materialkosten zu senken und Umweltbelastungen durch die Gewinnung und den Transport von Seltenen Erden zu verringern.

Zur Reduzierung des Seltenerdanteils werden bisher Leuchtstofflampen im Doppelschichtdesign hergestellt, wobei die Unterschicht aus einem gewöhnlichen Halophosphatleuchtstoff und die Deckschicht aus einem Seltenerdleuchtstoffe enthaltenden Gemisch besteht. Nachteilig an diesen Leuchtstofflampen sind der hohe Lichtverlust und der höhere Hg-Verbrauch über die Brenndauer. Der Lichtverlust wird durch Strahlungsschädigungen, insbesondere harte UV-Strahlung z.B. im VUV Bereich, des Halophosphatleuchtstoffs verursacht. Der höhere Hg-Verbrauch ist darauf zurückzuführen, dass Hg in die Halophosphatleuchtstoffkörner diffundiert.

Das Dokument SU 392 573 A1 offenbart eine zweilagige Leuchtstoffbeschichtung, wobei eine erste Lage Calcium enthält und die zweite Lage Antimon, Strontium oder Mangan enthalten kann. Leuchtstoff Kern-Schale-Partikel sind in diesem Dokument nicht offenbart.

Das Dokument EP 1 473 347 A1 offenbart Leuchtstoffpartikel, die einen Kern aus einem ersten Metallsalz oder einem ersten Metalloxid aufweisen, der von einer Leuchtstoffschicht aus einem zweiten Metallsalz oder zweitem Metalloxid umgeben ist.

Das Dokument WO 2007/082663 A1 offenbart anorganische, Leuchtstoffpartikel, die nicht aus Metallphosphaten gebildet sind.

Eine andere Maßnahme zur Reduzierung des Seltenerdanteils ist die Herstellung von Leuchtstofflampen im Reflektorschichtdesign. Hierbei wird die Innenseite des Entladungsgefäßes mit einer Al₂O₃ Schutzschicht beschichtet und darüber eine Seltenerd-Leuchtstoffe enthaltende Deckschicht aufgebracht. Nachteilig ist hierbei der höhere Anteil an Seltenerdleuchtstoffen gegenüber dem Doppelschichtdesign sowie eine geringere Bedeckung der Enden der Lampenkolben als Folge von Schichtdickenschwankungen über die Lampenkolbenlänge.

Die Aufgabe der vorliegenden Erfindung ist es, einen Leuchtstoff bzw. eine Leuchtstoffzusammensetzung für Niederdruckentladungslampen sowie eine Niederdruckentladungslampe mit einer solchen Leuchtstoffzusammensetzung bereitzustellen, die diesen Bedarf erfüllt, indem sie bei gleicher Effizienz und gleicher Lichtstromstabilität einen reduzierten Seltenerdanteil aufweist.

Diese Aufgabe wird gelöst durch einen Halophosphatleuchtstoff mit den Merkmalen des Anspruchs 1, eine Leuchtstoffzusammensetzung enthaltend den erfindungsgemäßen Halophosphatleuchtstoff mit den Merkmalen des Anspruchs 6 sowie durch eine Niederdruckentladungslampe mit den Merkmalen des Anspruchs 9.

Besonders vorteilhafte Ausgestaltungen finden sich in den abhängigen Ansprüchen.

Die Erfindung beruht auf der Entdeckung der Erfinder, dass sich durch das Coating von Leuchtstoffkörnern mit einer Schutzschicht die Stabilität des Leuchtstoffes verbessern und dadurch die Lichtausbeute länger erhalten lässt. Durch dieses Coating der Leuchtstoffe/Leuchtstoffkörner der Leuchtstoffzusammensetzung kann die Verwendung in Leuchtstoff- und Kompaktleuchtstofflampen im Hinblick auf die Stabilität gegenüber anregender Strahlung, im Hinblick auf eine geringe Affinität gegenüber Hg und damit eine geringe Adsorption von Hg während des Lampenbetriebes, und im Hinblick auf die Stabilität im Wasser, damit die heute üblichen, umweltfreundlichen Beschichtungsverfahren, bei denen Wasser-basierte Suspensionen eingesetzt werden, verwendet werden können, einen positiven Beitrag leisten. Diese die Leuchtstoffkörner umgebende Schutzschicht ist als möglichst dünne und dichte Schicht ausgebildet und unterscheidet sich in ihrer Zusammensetzung von der Zusammensetzung im Inneren des Leuchtstoffkorns.

In einem ersten Aspekt, betrifft die Erfindung daher einen Halophosphatleuchtstoff für Niederdruckentladungslampen, wobei der Leuchtstoff in Form von mit einer Schutzschicht überzogenen Leuchtstoffkörnern vorliegt. Die Schutzschicht besteht dabei aus einem Metallphosphat.

In verschiedenen Ausführungsformen ist die Schutzschicht auf die Oberfläche der Leuchtstoffkörner aufgebracht und bedeckt diese vollständig.

Die Begriffe "Schutzschicht" oder "Coating" werden hierin austauschbar verwendet und beziehen sich auf eine Schicht oder einen Film, der die Oberfläche der Leuchtstoffkörner überzieht. Vorzugsweise ist die gesamte Oberfläche des Leuchtstoffkorns gecoatet. In verschiedenen Ausführungsformen beträgt die Schichtdicke der Schutzschicht etwa 10 nm bis 1 µm.

"Leuchtstoffkorn", wie hierin verwendet, bezieht sich auf ein Partikel aus einem oder mehreren Leuchtstoffen. Bei dem Partikel kann es sich um ein im Wesentlichen sphärisches Partikel handeln. Der Begriff schließt Kristallite, Agglomerate, amorphe Partikel, etc. ein.

In verschiedenen Ausführungsformen der Erfindung enthält die Schutzschicht ein Metallphosphat, wobei das Metall aus Sc, Y, La, Gd, Lu, Al, Ce, Mg, Ca, Sr, Ba und Mischungen davon ausgewählt wird. In bestimmten Ausführungsformen besteht die Schutzschicht im Wesentlichen oder vollständig aus den vorgenannten Materialien.

Das Metallphosphat kann ein binäres Metallphosphat der Formel MePO₄ sein, wobei Me ausgewählt wird aus Sc, Y, La, Gd, Lu und Al. Das Metallphosphat kann ebenfalls ein ternäres Metallphosphat der Formel (Me¹₁₋ₓMe²ₓ) PO₄ sein, wobei Me¹ und Me² unabhängig voneinander ausgewählt werden aus Sc, Y, La, Gd, Lu und Al.

Als "Halophosphatleuchtstoff", wie hierin verwendet, werden Leuchtstoffe verstanden, bei denen es sich um halogenhaltige Phosphate, insbesondere von Metallen, wie beispielsweise Strontium, Calcium, Barium und Magnesium, handelt. Als "Halogen" werden insbesondere Fluor (F) und Chlor (Cl) eingesetzt. Beispielhafte Halophosphatleuchtstoffe schließen ein, sind aber nicht beschränkt auf Ca₁₀(PO₄)₆(F,Cl)₂:Sb,Mn; Ca₁₀(PO₄)₆F2:Sb,Mn; Sr₅(PO₄)₃F:Sb; Ca₅(PO₄)₃F:Sb; 3Ca₃(PO₄)₂·Ca(F,Cl)₂:Mn,Sb; und 3Sr₃(PO₄)₂·Sr(F,Cl)₂:Mn,Sb. "Halophosphatleuchtstoffe" im Sinne der Erfindung sind im Wesentlichen frei von Seltenen Erden, d.h. enthalten weder Seltenerdverbindungen noch sind sie mit Seltenen Erden dotiert. Der Gehalt an Seltenen Erden bezogen auf den beschichteten Halophosphatleuchtstoff ist daher in verschiedenen Ausführungsformen <0.1 Gew.-%, vorzugsweise <0.05 Gew.-%, noch bevorzugter <0.01 Gew.-%. In verschiedenen Ausführungsformen der Leuchtstoffzusammensetzungen der Erfindung können Mischungen von zwei oder mehr Halophosphatleuchtstoffen eingesetzt werden. Die Verwendung von beschichteten Halophosphatleuchtstoffen in Niederdruckentladungslampen erlaubt es die Schichtdicke der seltenerd-haltigen Dreibandenleuchtstoffe zu verringern, da die nicht absorbierte UV-Strahlung durch den Halophosphatleuchtstoff in sichtbares Licht umgewandelt wird. Durch das stabilisierende Coating können ferner für gewisse Spektralbereiche Halophosphatleuchtstoffe verwendet werden. So können beispielsweise bläuliche Halophosphatleuchtstoffe den Blauleuchtstoff BaMgAl₁₀O₁₇:Eu teilweise ersetzen.

Als "Seltenerdleuchtstoffe" im Sinne der Erfindung werden Leuchtstoffe bezeichnet, die Elemente der Seltenen Erden entweder in der Basis oder als Dotierungselement enthalten. "Seltenerdmetalle" oder "Seltene Erden", wie hierin verwendet, schließt die folgende Elemente ein: Scandium (Sc), Yttrium (Y), Lanthan (La), Cer (Ce), Praseodym (Pr), Neodym (Nd), Promethium (Pm), Samarium (Sm), Europium (Eu), Gadolinium (Gd), Terbium (Tb), Dysprosium (Dy), Holmium (Ho), Erbium (Er), Thulium (Tm), Ytterbium (Yb) und Lutetium (Lu). Der Begriff "Seltenerdleuchtstoffe", wie hierin verwendet, schließt ebenfalls Halophosphate von Seltenen Erden oder mit Seltenen Erden dotierte Halophosphate anderer Elemente ein. Beispielhafte Seltenerdleuchtstoffe schließen ein, sind aber nicht beschränkt auf LaPO₄:Ce,Tb; Y₂O₃:Eu; BaMgAl₁₀O₁₇: Eu; BaMg₂Al₁₆O₂₇:Eu,Mn; Y₂O₂S:Eu; Y₂O₂S:Tb; Y₂O₃:Tb; Y₂SiO₅:Ce; Y₂SiO₅:Tb; Y₃Al₅O₁₂:Ce; Gd(Zn,Mg)B₅O₁₀:Ce,Mn; Gd₂O₂S:Eu; Gd₂O₂S:Tb; Gd₂O₂S:_{Pr}; CeMg-Al₁₁O₁₉:Tb; (Ce,Tb)MgAl₁₁O₁₉:Ce,Tb; Sr₄Al₁₄O₂₅:Eu; Sr₁₀(PO₄)₆Cl₂:Eu; (Sr,Ca)₁₀(PO₄)₆Cl₂:Eu; (Sr,Ca,Ba)₁₀(PO₄)₆Cl₂:Eu Y₃(Al,Ca)₅O₁₂:Ce; Y₃(Al,Ca)₅O₁₂:Tb; YAlO₃:Ce; und Y(P,V)O₄:Eu. In mit Seltenen Erden dotierten Leuchtstoffen ist der Gehalt an Seltenen Erden bezogen auf den Leuchtstoff in verschiedenen Ausführungsformen >0.1 Gew.-%, vorzugsweise >0.5 Gew.-%, noch bevorzugter >1 Gew.-%. In verschiedenen Ausführungsformen der Erfindungen können Mischungen von zwei oder mehr Seltenerdleuchtstoffen eingesetzt werden.

Der Leuchtstoff liegt vorzugsweise in Form von Leuchtstoffkörnern vor. In verschiedenen Ausführungsformen haben diese Leuchtstoffkörner einen mittleren Durchmesser von < 25 µm, vorzugsweise < 10 µm, noch bevorzugter < 8 µm. Die Partikelgrößenverteilung kann im Wesentlichen monodispers sein. Verfahren zur Herstellung von Leuchtstoffkörnern sind im Stand der Technik bekannt.

Die Schutzschicht kann mittels unterschiedlicher Verfahren auf die Leuchtstoffkörner aufgebracht werden. Geeignete Verfahren schließen ein, sind aber nicht beschränkt auf chemische Gasphasenabscheidung (CVD) oder nasschemische Verfahren. Entsprechende Beschichtungsverfahren sind im Stand der Technik bekannt.

In einem weiteren Aspekt betrifft die Erfindung Leuchtstoffzusammensetzungen enthaltend mindestens einen Halophosphatleuchtstoff gemäß der Erfindung. In weiteren Ausführungsformen kann die Leuchtstoffzusammensetzung zusätzlich einen Seltenerdleuchtstoff enthalten. Dieser kann ebenfalls in Form von Leuchtstoffkörnern vorliegen, die mit einer Schutzschicht gemäß der Erfindung überzogen sind.

Als "Leuchtstoffzusammensetzung", wie hierin verwendet, wird insbesondere die Masse aller in einer Leuchtstoffschicht im Entladungsgefäß einer Niederdruckentladungslampe vorhandenen Leuchtstoffe verstanden.

In einer Ausführungsform der Erfindung enthält die Leuchtstoffzusammensetzung einen beschichteten Halophosphatleuchtstoff, beispielsweise aus der oben genannten Liste ausgewählt, und einen im blauen Wellenlängenbereich emittierenden Seltenerdleuchtstoff, der ebenfalls beschichtet sein kann, wie beispielsweise BaMgAl₁₀O₁₇:Eu.

In noch einem weiteren Aspekt betrifft die Erfindung eine Niederdruckentladungslampe mit einem mit einer Füllgaszusammensetzung gefüllten Entladungsgefäss und einer auf der Innenseite desselben aufgebrachten mehrschichtigen Leuchtstoffbeschichtung umfassend eine der Innenseite des Entladungsgefäßes zugewandte Leuchtstoffschicht (Unterschicht) und eine dem Entladungsraum zugewandte Leuchtstoffschicht (Deckschicht), wobei die der Innenseite des Entladungsgefäßes zugewandte Leuchtstoffschicht eine Leuchtstoffzusammensetzung gemäß der Erfindung enthält oder daraus besteht.

In verschiedenen Ausführungsformen der Erfindung enthält die dem Entladungsraum zugewandte Leuchtstoffschicht mindestens einen Seltenerdleuchtstoff. Dieser kann ausgewählt werden aus der Gruppe bestehend aus: LaPO₄:Ce,Tb; Y₂O₃:Eu; BaMgAl₁₀O₁₇:Eu; BaMg₂Al₁₆O₂₇:Eu,Mn; Y₂O₂S:Eu; Y₂O₂S:Tb; Y₂O₅:Tb; Y₂SiO₅:Ce; Y₂SiO₅:Tb; Y₃Al₅O₁₂:Ce; Gd(Zn,Mg)B₅O₁₀:Ce,Mn; Gd₂O₂S:Eu; Gd₂O₂S:Tb; Gd₂O₂S:Pr; CeMg-Al₁₁O₁₉:Tb; (Ce,Tb)MgAl₁₁O₁₉:Ce,Tb; Sr₄Al₁₄O₂₅:Eu; Sr₁₀(PO₄)₆Cl₂:Eu; (Sr,Ca)₁₀ (PO₄)₆Cl₂:Eu; (Sr,Ca,Ba)₁₀(PO₄)₆Cl₂:Eu Y₃(Al,Ca)₅O₁₂:Ce; Y₃(Al,Ca)₅O₁₂:Tb; YAlO₃:Ce; und Y(P,V)O₄:Eu.

In einer Ausführungsform der Erfindung, enthält auch die dem Entladungsraum zugewandte Leuchtstoffschicht eine Leuchtstoffzusammensetzung gemäß der Erfindung. Vorzugsweise enthält diese Leuchtstoffschicht mindestens einen Seltenerdleuchtstoff.

In verschiedenen Ausführungsformen, enthält die dem Entladungsraum zugewandte Leuchtstoffzusammensetzung mindestens 3 Seltenerdleuchtstoffe, wobei diese einen im roten Wellenlängenbereich emittierenden Leuchtstoff, einen im grünen Wellenlängenbereich emittierenden Leuchtstoff und einen im blauen Wellenlängenbereich emittierenden Leuchtstoff umfassen. Alternativ kann die dem Entladungsraum zugewandte Leuchtstoffzusammensetzung mindestens 4 Seltenerdleuchtstoffe enthalten, wobei diese einen im roten Wellenlängenbereich emittierenden Leuchtstoff, einen im grünen Wellenlängenbereich emittierenden Leuchtstoff, einen im blauen Wellenlängenbereich emittierenden Leuchtstoff und einen im blaugrünen Wellenlängenbereich emittierenden Leuchtstoff umfassen. Der im roten Wellenlängenbereich emittierende Leuchtstoff kann beispielsweise Gd(Zn,Mg)B₅O₁₀:Ce,Mn oder Y₂O₃:Eu sein. Der im grünen Wellenlängenbereich emittierende Leuchtstoff kann beispielsweise LaPO₄:Ce,Tb oder CeMg-Al₁₁O₁₉:Tb sein. Der im blauen Wellenlängenbereich emittierende Leuchtstoff kann beispielsweise BaMgAl₁₀O₁₇:Eu oder Sr₁₀(PO₄)₆Cl₂:Eu sein. Der im blaugrünen Wellenlängenbereich emittierende Leuchtstoff kann beispielsweise Sr₄Al₁₄O₂₅:Eu oder BaMg₂Al₁₆O₂₇:Eu,Mn sein. Bei diesen Seltenerdleuchtstoffen kann es sich um beschichtete Leuchtstoffe oder auch unbeschichtete Leuchtstoffe handeln.

Die Herstellung von Niederdruckentladungslampen mit entsprechenden Leuchtstoffschichten ist im Stand der Technik bekannt. Für die Herstellung der Niederdruckentladungslampen der vorliegenden Erfindung werden die gecoateten Leuchtstoffe als Pulver für die Herstellung einer wässrigen Leuchtstoffsuspension verwendet, die dann mittels bekannter Verfahren auf die Innenseite des Entladungsgefäßes aufgebracht wird.

In verschiedenen Ausführungsformen umfasst die Niederdruckentladungslampe ferner eine Schutzschicht, die zwischen der Innenseite des Entladungsgefäßes und der der Innenseite des Entladungsgefäßes zugewandten Leuchtstoffschicht angeordnet ist. Diese Schutzschicht kann aus Al₂O₃, Y₂O₃, La₂O₃, einem Metallborat, einem Metallphosphat, oder Mischungen davon bestehen, wobei das Metall aus Sc, Y, La, Gd, Lu, Al, Ce, Mg, Ca, Sr, Ba und Mischungen davon bestehen kann. Hierdurch kann eine Diffusion des im Entladungsgefäß vorhandenen Quecksilbers in das Material des Entladungsgefäßes, üblicherweise Glas, und eine damit einhergehende Schwärzung desselben effektiv verhindert werden.

In verschiedenen Ausführungsformen der Erfindung enthalten die Niederdruckentladungslampen der Erfindung ein Füllgas, bei dem es sich um ein Edelgas oder eine Mischung von Edelgasen handelt. In einer Ausführungsform ist das Füllgas eine Füllgaszusammensetzung, die aus Argon und/oder Krypton besteht.

Die Niederdruckentladungslampe der Erfindung kann eine Hg-Niederdruckentladungslampe sein. Die Hg-Niederdruckentladungslampe kann beispielsweise eine Kompaktleuchtstofflampe (Energiesparlampe) sein. In verschiedenen Ausführungsformen kommt die erfindungsgemäße Leuchtstoffzusammensetzung in einer stabförmigen Niederdruckentladungslampe, beispielsweise der Bauform T8 L36W zum Einsatz.

"Ungefähr", wie hierin im Zusammenhang mit Zahlenwerten verwendet, schließt eine Variation von bis zu ±10%, vorzugsweise ±5% ein.

Alle für die Leuchtstoffmischung und die Leuchtstoffverbindungen angegebene chemischen Formeln sind als Idealformen angegeben, es ist jedoch beabsichtigt, dass aber auch alle über diese Idealformeln hinausgehenden Verbindungen mit geringfügigen Abweichungen von der Stöchiometrie explizit von der Erfindung erfasst sind. Das gilt insbesondere für Abweichungen bei denen die Kristallstruktur unverändert bleibt und die Abweichungen in Emissions- und Absorptionsspektren sich in der Peaklage um weniger als 1%, und in der Peakbreite um weniger 5% unterscheiden.

In einem weiteren Aspekt betrifft die Erfindung die Verwendung der erfindungsgemäßen Leuchtstoffe und Leuchtstoffzusammensetzungen als Leuchtstoffbeschichtung in einer Niederdruckentladungslampe.

Die Erfindung wird hierin durch Bezugnahme auf bestimmte Ausführungsformen beschrieben, ist aber nicht auf diese beschränkt.

## Patentansprüche

1. Halophosphatleuchtstoff für Niederdruckentladungslampen **dadurch gekennzeichnet, dass**
der Halophosphatleuchtstoff in Form von Leuchtstoffkörnern vorliegt, deren Oberfläche jeweils vollständig mit einer Schutzschicht überzogen ist, wobei die Schutzschicht aus einem Metallphosphat besteht, wobei das Metall aus Sc, Y, La, Gd, Lu, Al, Ce, Mg, Ca, Sr, Ba und Mischungen davon ausgewählt wird.

2. Halophosphatleuchtstoff gemäß Anspruch 1,
**dadurch gekennzeichnet, dass**
(i) das Metallphosphat ein binäres Metallphosphat der Formel MePO₄ist, wobei Me ausgewählt wird aus Sc, Y, La, Gd, Lu und Al; oder
(ii) das Metallphosphat ein ternäres Metallphosphat der Formel (Me¹ₓ₋₁Me²ₓ)PO₄ ist, wobei Me¹ und Me² unabhängig voneinander ausgewählt werden aus Sc, Y, La, Gd, Lu und Al und 0 < x < 1.

3. Halophosphatleuchtstoff gemäß einem der vorhergehenden Ansprüche,
**dadurch gekennzeichnet, dass**
der Leuchtstoff ausgewählt wird aus der Gruppe bestehend aus: Ca₁₀(PO₄)₆(F,Cl)₂:Sb,Mn; Ca₁₀(PO₄)₆F₂:Sb,Mn; Sr₅(PO₄)₃F:Sb; Ca₅(PO₄)₃F:Sb; 3Ca₃(PO₄)₂·Ca(F,Cl)₂:Mn,Sb; und 3Sr₃(PO₄)₂·Sr(F,Cl)₂:Mn,Sb.

4. Halophosphatleuchtstoff gemäß einem der vorhergehenden Ansprüche,
**dadurch gekennzeichnet, dass**
die Schutzschicht mittels chemischer Gasphasenabscheidung (CVD) oder mittels nasschemischer Verfahren auf die Leuchtstoffkörner aufgebracht wird.

5. Halophosphatleuchtstoff gemäß einem der vorhergehenden Ansprüche,
**dadurch gekennzeichnet, dass**
der Leuchtstoff eine mittlere Korngröße von weniger als 10 µm aufweist.

6. Leuchtstoffzusammensetzung für Niederdruckentladungslampen,
**dadurch gekennzeichnet, dass**
die Leuchtstoffzusammensetzung mindestens einen Halophosphatleuchtstoff nach einem der Ansprüche 1 bis 5 enthält.

7. Leuchtstoffzusammensetzung gemäß Anspruch 6,
**dadurch gekennzeichnet, dass**
die Leuchtstoffzusammensetzung ferner mindestens einen Seltenerdleuchtstoff enthält.

8. Leuchtstoffzusammensetzung gemäß Anspruch 7,
**dadurch gekennzeichnet, dass**
der mindestens eine Seltenerdleuchtstoff ausgewählt wird aus der Gruppe bestehend aus: LaPO₄:Ce,Tb; Y₂O₃:Eu; BaMgAl₁₀O₁₇:Eu; BaMg₂Al₁₆O₂₇:Eu,Mn; Y₂O₂S:Eu; Y₂O₂S:Tb; Y₂O₅:Tb; Y₂SiO₅:Ce; Y₂SiO₅:Tb; Y₃Al₅O₁₂:Ce; Gd(Zn,Mg)B₅O₁₀:Ce,Mn; Gd₂O₂S:Eu; Gd₂O₂S:Tb; Gd₂O₂S:Pr; CeMg Al₁₁O₁₉:Tb; (Ce,Tb)MgAl₁₁O₁₉:Ce,Tb; Sr₄Al₁₄O₂₅:Eu; Sr₁₀(PO₄)₆Cl₂:Eu; (Sr,Ca)₁₀(PO₄)₆Cl₂:Eu; (Sr,Ca,Ba)₁₀(PO₄)₆Cl₂:Eu; Y₃(Al,Ca)₅O₁₂:Ce; Y₃(Al,Ca)₅O₁₂:Tb; YAlO₃:Ce; und Y(P,V)O₄:Eu.

9. Niederdruckentladungslampe mit einem mit einer Füllgaszusammensetzung gefüllten Entladungsgefäß und einer auf der Innenseite desselben aufgebrachten mehrschichtigen Leuchtstoffbeschichtung umfassend eine der Innenseite des Entladungsgefäßes zugewandte Leuchtstoffschicht und eine dem Entladungsraum zugewandte Leuchtstoffschicht,
**dadurch gekennzeichnet, dass**
die der Innenseite des Entladungsgefäßes zugewandte Leuchtstoffschicht eine Leuchtstoffzusammensetzung gemäß einem der Ansprüche 6 bis 8 enthält.

10. Niederdruckentladungslampe gemäß Anspruch 9,
**dadurch gekennzeichnet, dass**
die dem Entladungsraum zugewandte Leuchtstoffschicht mindestens einen Seltenerdleuchtstoff enthält.

11. Niederdruckentladungslampe gemäß Anspruch 10,
**dadurch gekennzeichnet, dass**
der mindestens eine Seltenerdleuchtstoff ausgewählt wird aus der Gruppe bestehend aus: LaPO₄:Ce,Tb; Y₂O₃:Eu; BaMgAl₁₀O₁₇:Eu; BaMg₂Al₁₆O₂₇:Eu,Mn; Y₂O₂S:Eu; Y₂O₂S:Tb; Y₂O₅:Tb; Y₂SiO₅:Ce; Y₂SiO₅:Tb; Y₃Al₅O₁₂:Ce; Gd(Zn,Mg)B₅O₁₀:Ce,Mn; Gd₂O₂S:Eu; Gd₂O₂S:Tb; Gd₂O₂S:Pr; CeMg Al₁₁O₁₉:Tb; (Ce,Tb)MgAl₁₁O₁₉:Ce,Tb; Sr₄Al₁₄O₂₅:Eu; Sr₁₀(PO₄)₆Cl₂:Eu; (Sr,Ca)₁₀(PO₄)₆Cl₂:Eu; (Sr,Ca,Ba)₁₀(PO₄)₆Cl₂:Eu; Y₃(Al,Ca)₅O₁₂:Ce; Y₃(Al,Ca)₅O₁₂:Tb; YAlO₃:Ce; und Y(P,V)O₄:Eu.

12. Niederdruckentladungslampe gemäß einem der Ansprüche 9 bis 11,
**dadurch gekennzeichnet, dass**
(i) die dem Entladungsraum zugewandte Leuchtstoffzusammensetzung mindestens 3 Seltenerdleuchtstoffe enthält, wobei diese einen im roten Wellenlängenbereich emittierenden Leuchtstoff, einen im grünen Wellenlängenbereich emittierenden Leuchtstoff und einen im blauen Wellenlängenbereich emittierenden Leuchtstoff umfassen; oder
(ii) die dem Entladungsraum zugewandte Leuchtstoffzusammensetzung mindestens 4 Seltenerdleuchtstoffe enthält, wobei diese einen im roten Wellenlängenbereich emittierenden Leuchtstoff, einen im grünen Wellenlängenbereich emittierenden Leuchtstoff, einen im blauen Wellenlängenbereich emittierenden Leuchtstoff und einen im blaugrünen Wellenlängenbereich emittierenden Leuchtstoff umfassen.

13. Niederdruckentladungslampe gemäß einem der Ansprüche 9 bis 12,
**dadurch gekennzeichnet, dass**
(a) die Niederdruckentladungslampe ferner eine Schutzschicht umfasst, die zwischen der Innenseite des Entladungsgefäßes und der der Innenseite des Entladungsgefäßes zugewandten Leuchtstoffschicht angeordnet ist, wobei die Schutzschicht insbesondere aus Al₂O₃, Y₂O₃, La₂O₃, einem Metallborat, einem Metallphosphat, oder Mischungen davon besteht, wobei das Metall aus Sc, Y, La, Gd, Lu, Al, Ce, Mg, Ca, Sr, Ba und Mischungen davon ausgewählt wird; und/oder
(b) die Füllgaszusammensetzung Argon und/oder Krypton umfasst.

14. Niederdruckentladungslampe gemäß einem der Ansprüche 9 bis 13,
**dadurch gekennzeichnet, dass**
die Niederdruckentladungslampe eine Hg-Niederdruckentladungslampe, insbesondere eine Kompaktleuchtstofflampe ist.

## Claims

1. Halophosphate phosphor for low-pressure discharge lamps, **characterised in that** the halophosphate phosphor is provided in the form of phosphor particles, the surface of which is completely coated in each case with a protective layer, wherein the protective layer consists of a metal phosphate, wherein the metal is selected from Sc, Y, La, Gd, Lu, Al, Ce, Mg, Ca, Sr, Ba, and mixtures thereof.

2. Halophosphate phosphor according to claim 1,
**characterised in that**
(i) the metal phosphate is a binary metal phosphate with the formula MePO₄, wherein Me is selected from Sc, Y, La, Gd, Lu and Al; or
(ii) the metal phosphate is a ternary metal phosphate with the formula (Me¹₁₋ₓMe²ₓ)PO₄, wherein Me¹ and Me² are selected independently of each other from Sc, Y, La, Gd, Lu and Al and 0 < x < 1.

3. Halophosphate phosphor according to one of the preceding claims, **characterised in that** the phosphor is selected from the group consisting of:
Ca₁₀(PO₄)₆(F,Cl)₂:Sb,Mn; Ca₁₀(PO₄)₆F₂:Sb,Mn; Sr₅(PO₄)₃F:Sb; Ca₅(PO₄)₃F:Sb; 3Ca₃(PO₄)₂·Ca(F,Cl)₂:Mn,Sb; and 3Sr₃(PO₄)₂·Sr(F,Cl)₂:Mn,Sb.

4. Halophosphate phosphor according to one of the preceding claims, **characterised in that** the protective layer is applied to the phosphor particles by means of chemical vapour deposition (CVD) or by means of wet-chemical methods.

5. Halophosphate phosphor according to one of the preceding claims, **characterised in that** the phosphor has a mean particle size of less than 10 µm.

6. Phosphor composition for low-pressure discharge lamps, **characterised in that** the phosphor composition contains at least one halophosphate phosphor according to one of the claims 1 to 5.

7. Phosphor composition according to claim 6, **characterised in that** the phosphor composition furthermore contains at least one rare-earth phosphor.

8. Phosphor composition according to claim 7, **characterised in that** the at least one rare-earth phosphor is selected from the group consisting of:
LaPO₄:Ce,Tb; Y₂O₃:Eu; BaMgAl₁₀O₁₇:Eu; BaMg₂Al₁₆O₂₇:Eu,Mn; Y₂O₂S:Eu; Y₂O₂S:Tb; Y₂O₅:Tb; Y₂SiO₅:Ce; Y₂SiO₅:Tb; Y₃Al₅O₁₂:Ce; Gd(Zn,Mg)B₅O₁₀:Ce,Mn; Gd₂O₂S:Eu; Gd₂O₂S:Tb; Gd₂O₂S:Pr; CeMgAl₁₁O₁₉:Tb; (Ce,Tb)MgAl₁₁O₁₉:Ce,Tb; Sr₄Al₁₄O₂₅:Eu; Sr₁₀(PO₄)₆Cl₂:Eu; (Sr,Ca)₁₀(PO₄)₆Cl₂:Eu; (Sr,Ca,Ba)₁₀(PO₄)₆Cl₂:Eu; Y₃(Al,Ca)₅O₁₂:Ce; Y₃(Al,Ca)₅O₁₂:Tb; YAlO₃:Ce; and Y(P,V)O₄:Eu.

9. Low-pressure discharge lamp with a discharge tube filled with a filling-gas composition and a multi-layer phosphor coating applied on the inside of the discharge tube comprising a phosphor layer facing the inside of the discharge tube and a phosphor layer facing the discharge space, **characterised in that** the phosphor layer facing the inside of the discharge tube contains a phosphor composition according to one of the claims 6 to 8.

10. Low-pressure discharge lamp according to claim 9, **characterised in that** the phosphor layer facing the discharge space contains at least one rare-earth phosphor.

11. Low-pressure discharge lamp according to claim 10, **characterised in that** the at least one rare-earth phosphor is selected from the group consisting of:
LaPO₄:Ce,Tb; Y₂O₃:Eu; BaMgAl₁₀O₁₇:Eu; BaMg₂Al₁₆O₂₇:Eu,Mn; Y₂O₂S:Eu; Y₂O₂S:Tb; Y₂O₅:Tb; Y₂SiO₅:Ce; Y₂SiO₅:Tb; Y₃Al₅O₁₂:Ce; Gd(Zn,Mg)B₅O₁₀:Ce,Mn; Gd₂O₂S:Eu; Gd₂O₂S:Tb; Gd₂O₂S:Pr; CeMgAl₁₁O₁₉:Tb; (Ce,Tb)MgAl₁₁O₁₉:Ce,Tb; Sr₄Al₁₄O₂₅:Eu; Sr₁₀(PO₄)₆Cl₂:Eu; (Sr,Ca)₁₀(PO₄)₆Cl₂:Eu; (Sr,Ca,Ba)₁₀(PO₄)₆Cl₂:Eu; Y₃(Al,Ca)₅O₁₂:Ce; Y₃(Al,Ca)₅O₁₂:Tb; YAlO₃:Ce; and Y(P,V)O₄:Eu.

12. Low-pressure discharge lamp according to one of the claims 9 to 11, **characterised in that**
(i) the phosphor composition facing the discharge space contains at least 3 rare-earth phosphors, wherein these comprise a phosphor emitting in the red wavelength range, a phosphor emitting in the green wavelength range and a phosphor emitting in the blue wavelength range; or
(ii) the phosphor composition facing the discharge space contains at least 4 rare-earth phosphors, wherein these comprise a phosphor emitting in the red wavelength range, a phosphor emitting in the green wavelength range, a phosphor emitting in the blue wavelength range and a phosphor emitting in the blue-green wavelength range.

13. Low-pressure discharge lamp according to one of the claims 9 to 12, **characterised in that**
(a) the low-pressure discharge lamp furthermore comprises a protective layer, which is disposed between the inside of the discharge tube and the phosphor layer facing the inside of the discharge tube, wherein the protective layer consists in particular of Al₂O₃, Y₂O₃, La₂O₃, a metal borate, a metal phosphate or mixtures thereof, wherein the metal is selected from Sc, Y, La, Gd, Lu, Al, Ce, Mg, Ca, Sr, Ba and mixtures thereof; and/or
(b) the filling-gas composition comprises argon and/or krypton.

14. Low-pressure discharge lamp according to one of the claims 9 to 13, **characterised in that** the low-pressure discharge lamp is a Hg low-pressure discharge lamp, in particular a compact fluorescent lamp.

## Revendications

1. Luminophore halophosphate pour des lampes à décharge à basse pression,
**caractérisé en ce que**
le luminophore halophosphate se présente sous la forme de grains de luminophore dont la surface est revêtue respectivement complètement avec une couche protectrice, dans lequel la couche protectrice consiste en un phosphate de métal, dans lequel le métal est choisi parmi Sc, Y, La, Gd, Lu, Al, Ce, Mg, Ca, Sr, Ba et leurs mélanges.

2. Luminophore halophosphate selon la revendication 1,
**caractérisé en ce que**
(i) le phosphate de métal est un phosphate de métal binaire de formule MePO₄, dans lequel Me est choisi parmi Sc, Y, La, Gd, Lu et Al ; ou
(ii) le phosphate de métal est un phosphate de métal ternaire de formule (Me¹₁₋ₓMe²ₓ)PO₄, dans lequel Me¹ et Me² sont choisis indépendamment l'un de l'autre parmi Sc, Y, La, Gd, Lu et Al et 0 < x < 1.

3. Luminophore halophosphate selon l'une des revendications précédentes,
**caractérisé en ce que**
le luminophore est choisi dans le groupe consistant en : Ca₁₀(PO₄)₆(F, Cl)₂ : Sb, Mn ; Ca₁₀(PO₄)₆F₂ : Sb, Mn ; Sr₅(PO₄)₃F : Sb ; Ca₅(PO₄)₃F : Sb ; 3Ca₃(PO₄)₂·Ca(F, Cl)₂ : Mn, Sb ; et 3Sr₃(PO₄)₂·Sr(F, Cl)₂ : Mn, Sb.

4. Luminophore halophosphate selon l'une des revendications précédentes,
**caractérisé en ce que**
la couche protectrice est appliquée au moyen d'un dépôt chimique en phase gazeuse (CVD) ou au moyen d'un procédé chimique à l'état humide sur les grains de luminophore.

5. Luminophore halophosphate selon l'une des revendications précédentes,
**caractérisé en ce que**
le luminophore présente une taille de grain moyenne inférieure à 10 µm.

6. Composition de luminophore pour des lampes à décharge à basse pression
**caractérisée en ce que**
la composition de luminophore contient au moins un luminophore halophosphate selon l'une des revendications 1 à 5.

7. Composition de luminophore selon la revendication 6,
**caractérisée en ce que**
la composition de luminophore contient en outre au moins un luminophore à terres rares.

8. Composition de luminophore selon la revendication 7,
**caractérisée en ce que**
l'au moins un luminophore à terres rares est choisi dans le groupe consistant en : LaPO₄ : Ce, Tb ; Y₂O₃ : EU ; BaMgAl₁₀O₁₇: Eu ; BaMg₂Al₁₆O₂₇ : Eu, Mn ; Y₂O₂S : Eu ; Y₂O₂S : Tb ; Y₂O₅ Tb ; Y₂SiO₅ : Ce ; Y₂SiO₅ : Tb ; Y₃Al₅O₁₂: Ce ; Gd(Zn, Mg)B₅O₁₀ : Ce, Mn ; Gd₂O₂S : Eu ; Gd₂O₂S : Tb ; Gd₂O₂S : Pr ; CeMgAl₁₁O₁₉ : Tb ; (Ce, Tb)MgAl₁₁O₁₉ Ce, Tb ; Sr₄Al₁₄O₂₅ : Eu ; Sr₁₀(PO₄)₆Cl₂ : Eu ; (Sr, Ca)₁₀(PO₄)₆Cl₂ : Eu ; (Sr, Ca, Ba)₁₀(PO₄)₆Cl₂ : Eu ; Y₃(Al, Ca)₅O₁₂ : Ce ; Y₃(Al, Ca)₅O₁₂: Tb ; YAlO₃: Ce ; et Y(P, V)O₄ : Eu.

9. Lampe à décharge à basse pression comportant un récipient de décharge rempli d'une composition de gaz de remplissage et un revêtement de luminophore multicouche appliqué sur la face intérieure de celui-ci comprenant une couche de luminophore tournée vers la face intérieure du récipient de décharge et une couche de luminophore tournée vers l'espace de décharge,
**caractérisée en ce que**
la couche de luminophore tournée vers la face intérieure du récipient de décharge contient une composition de luminophore selon l'une des revendications 6 à 8.

10. Lampe à décharge à basse pression selon la revendication 9,
**caractérisée en ce que**
la couche de luminophore tournée vers l'espace de décharge contient au moins un luminophore à terres rares.

11. Lampe à décharge à basse pression selon la revendication 10,
**caractérisée en ce que**
l'au moins un luminophore à terres rares est choisi dans le groupe consistant en : LaPO₄ : Ce, Tb ; Y₂O₃ : EU ; BaMgAl₁₀O₁₇: Eu ; BaMg₂Al₁₆O₂₇ : Eu, Mn ; Y₂O₂S : Eu ; Y₂O₂S : Tb ; Y₂O₅ : Tb ; Y₂SiO₅ : Ce ; Y₂SiO₅ : Tb ; Y₃Al₅O₁₂: Ce ; Gd(Zn, Mg)B₅O₁₀ : Ce, Mn ; Gd₂O₂S : Eu ; Gd₂O₂S : Tb ; Gd₂O₂S : Pr ; CeMgAl₁₁O₁₉ : Tb ; (Ce, Tb)MgAl₁₁O₁₉ Ce, Tb ; Sr₄Al₁₄O₂₅ : Eu ; Sr₁₀(PO₄)₆Cl₂ : Eu ; (Sr, Ca)₁₀(PO₄)₆Cl₂ : Eu ; (Sr, Ca, Ba)₁₀(PO₄)₆Cl₂ : Eu ; Y₃(Al, Ca)₅O₁₂ : Ce ; Y₃(Al, Ca)₅O₁₂ : Tb ; YAlO₃: Ce ; et Y(P, V)O₄ : Eu.

12. Lampe à décharge à basse pression selon l'une des revendications 9 à 11,
**caractérisée en ce que**
(i) la composition de luminophore tournée vers l'espace de décharge contient au moins 3 luminophores à terres rares, dans laquelle ceux-ci comprennent un luminophore émettant dans la plage de longueurs d'ondes rouges, un luminophore émettant dans la plage de longueurs d'ondes vertes et un luminophore émettant dans la plage de longueurs d'ondes bleues ; ou
(ii) la composition de luminophore tournée vers l'espace de décharge contient au moins 4 luminophores à terres rares, dans laquelle ceux-ci comprennent un luminophore émettant dans la plage de longueurs d'ondes rouges, un luminophore émettant dans la plage de longueurs d'ondes vertes et un luminophore émettant dans la plage de longueurs d'ondes bleues et un luminophore émettant dans la plage de longueur d'ondes bleu-vert.

13. Lampe à décharge à basse pression selon l'une des revendications 9 à 12,
**caractérisée en ce que**
(a) la lampe à décharge à basse pression comprend en outre une couche protectrice qui est disposée entre la face intérieure du récipient de décharge et la couche de luminophore tournée vers la face intérieure du récipient de décharge, dans laquelle la couche protectrice consiste en particulier en Al₂O₃, Y₂O₃, La₂O₃, un borate de métal, un phosphate de métal ou des mélanges de ceux-ci, dans laquelle le métal est choisi de Sc, Y, La, Gd, Lu, Al, Ce, Mg, Ca, Sr, Ba et leurs mélanges ; et/ou
(b) la composition de gaz de remplissage comprend l'argon et/ou le crypton.

14. Lampe à décharge à basse pression selon l'une des revendications 9 à 13,
**caractérisée en ce que**
la lampe à décharge à basse pression est une lampe à décharge à basse pression Hg, en particulier une lampe à luminophore compacte.
